# EUROPEAN PATENT SPECIFICATION

(11) **EP 2 377 720 B1**
(45) Date of publication and mention of the grant of the patent: **10.06.2015**
(21) Application number: 10160320.7
(22) Date of filing: 19.04.2010
(51) Int. Cl.: B60Q 1/26

(54) **Light guide device for automotive use**
Lichtleitervorrichtung zur Verwendung in Automobilen
Dispositif de guide lumineux pour utilisation automobile

(43) Date of publication of application: 19.10.2011
(73) Proprietor: SMR Patents S.à.r.l., 1653 Luxembourg (LU)
(72) Inventor: Belcher, Simon, South Plympton, South Australia 5048 (AU); Schmidt, Nicholas, Macomb 48044, Michigan (US)
(74) Representative: Weber-Bruls, Dorothée

(56) References cited:
- EP-A1- 1 304 260
- EP-A1- 1 847 767
- EP-A1- 1 852 306
- EP-A2- 1 391 348
- EP-A2- 1 726 480
- WO-A1-2009/110476
- US-A1- 2004 257 790

## Description

The invention refers to a rear view mirror assembly in line with the pre-amble of claim 1. That is, it is related to a light guide device that is specially adapted to fulfil the legal regulations of visibility and can be produced in a cost efficient way. Especially light guide devices have openings that each allow light to be coupled in at a well defined position.

### BACKGROUND OF THE INVENTION

Vehicle lamps such as for example side flashing lamps or side marking or riding lamps frequently use bar-shaped light guides into which the light of a light source such as in particular an LED, is coupled at the end. Light guides have in particular the advantage that a desired light distribution can be implemented using relatively simple means and very inexpensively.

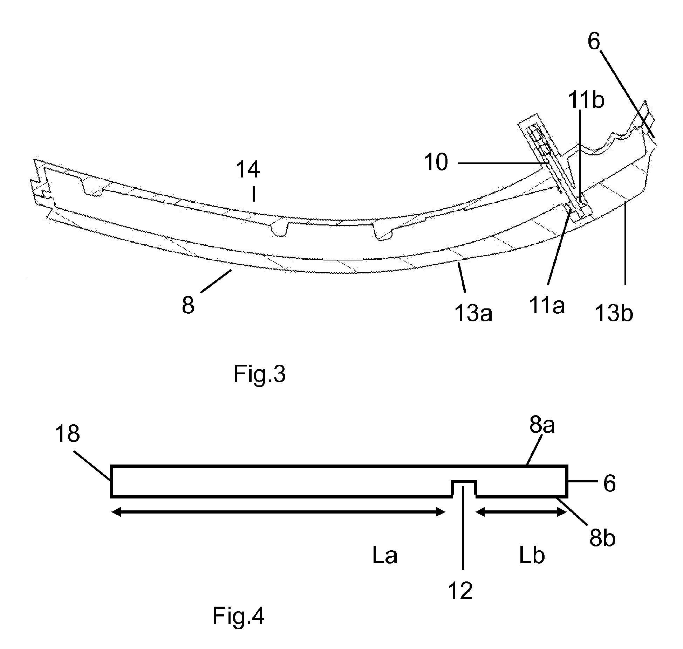

In prior art as US 7357549 the structure and function of a typical vehicle lamp with a bar-shaped light guide is describe in detail. Fig. 4 in prior art shows a side flashing lamp 4 which is integrated in an external rear view mirror 1 of a motor vehicle. In the present example the side flashing lamp 4 includes bar-shaped light guides 5, which extend substantially horizontally in the installed position on the vehicle. In operation light is coupled into the light guide 5 at a position dividing the light guide into two parts 5a and 5b, and the light is propagated as far as the oppositely disposed ends and is coupled out there or along the light guide. A part of the light also passes to the exterior (forwardly in the direction of travel) through a light exit opening 3 in the cover cap 2.

The prior art shows a solution with a cut in the light guide and a stepped outer surface of the light guide. By implementing the cut the material strength is small and the step in the light guide covering the light sourced is in result quite weak. In addition the conditions to couple the light into the light guide are not described.

As can be seen there from, arranged at the end 10 of the light guides 5, 5', which is the vehicle end, are light sources in the form of light emitting diodes 11 whose light is coupled into the light guides 5, 5' in a longitudinal direction L. The major part of the light is passed by total reflection at lateral interfaces to a coupling-out end 7. In that situation a part of the light is scattered or deflected and, as mentioned, passes to the exterior through the light exit opening 3. The coupling-out end 7 has a bevelled coupling-out surface 8 whose inclination is selected in a way that the light which issues is emitted into a solid angular region which is prescribed by regulation, that is to say substantially transversely with respect to the direction of travel and somewhat inclined rearwardly, as is indicated by arrows F. In that respect the light emission region is determined by the direction of the light guide at the coupling-out end 7 and the inclination of the bevelled surface 8. The prior art solution does not describe how to couple light into the light guide structure.

US 20040257790 discloses a vehicle lamp mounted in a rear view mirror. A bulky light guide member 12 is attached to a mirror and includes a LED that is inserted in a hole in the bulky light guide. The LED is mounted on a printed circuit board. The prior art does not solve the problem to illuminate two parts of a light guide through a recess in a turn signal module.

EP 1304260 discloses an embodiment of Figure 72 with elongated shaped light guide with a recess for two LEDs. The recess of fig. 72 is not designed as a cut or a structure with well defines surfaces, flat or convex or concave. The LEDs are not inserted to illuminate the two light guide parts similar to separate portions. In this prior art the two portions of the light guide are not only illuminated by the light sources in the recess but by an additional light source at one end of the light guide. Therefore there is no need to couple light into two portions of the light guide similar to a structure with separated light guides and to optimize recess dimensions.

### SUMMARY OF THE INVENTION

An object of the present invention is to provide a vehicle lamp such as a side flashing lamp having a light guide, which has few components and which is inexpensive to produce. A further object of the invention is to provide a vehicle lamp which has optimized conditions to couple the light of the light source into the light guide having a flat surface.

A rear view mirror assembly according to claim 1 achieves these objects.

The foregoing and other objects are attained in accordance with the invention by a vehicle lamp, for example for installation in a cover cap of an external rear view mirror, comprising at least one elongate light guide and a light source whose light is coupled into the light guide in a longitudinal direction. The at least one light guide is part of a cover plate unit which is formed in one piece.

The light guide-cover plate unit is preferably an injection molded part. Such a member can be particularly easily and inexpensively produced. Preferably LEDs are used as the light sources. A preferred embodiment of the light guide-cover plate unit includes at least one light guide which has a plurality of light guide portions arranged in adjoining relationship in the longitudinal direction and at least one light source, the light of which is coupled into the light guide portions at a defined portion of the light guide in opposite directions. That has the advantage in particular that the fact that the light is coupled into the assembly in an optimized position makes it possible to produce a vehicle lamp which is inexpensive and of a simple structure.

The optimization rule is not restricted to a solution with integrated light guide in a lens cover plate but could be also used in a light guide installed in a turn signal indicator behind a separate lens.

Further objects, features and advantages of the invention will be apparent from the description hereinafter of a preferred embodiment.

### Short Description of the Drawings

Fig. 1 shows a schematic rear view mirror;
Fig. 2 shows an inventive turn signal indicator module;
Fig. 3 shows a cross section of a turn signal indicator;
Fig 4 shows the relation of light guide portions;
Fig. 5 shows the relation of the light guide recess;
Fig. 6a and Fig. 6b show the examples of the light guide recess which do not form part of the invention;
Fig. 7 shows an embodiment of of the light guide recess according to the invention;
Fig. 8 shows an example of the light guide recess which does not form part of the invention.

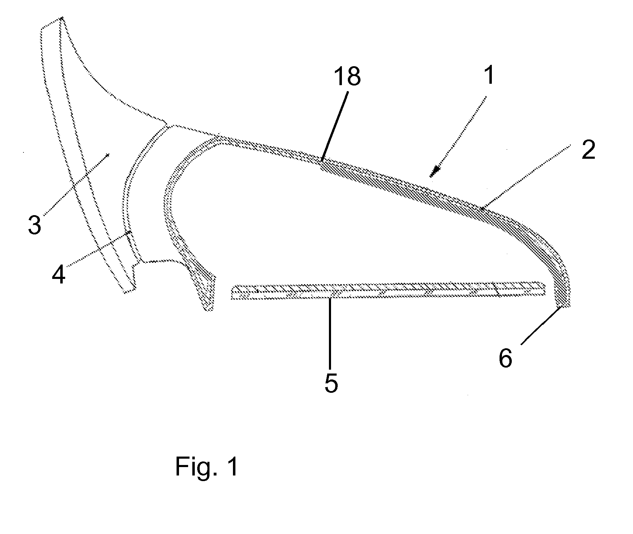

Figure 1 shows schematically a rear view mirror assembly 1 with a mirror base 3 that is attached at a vehicle. The mirror head 2 is pivotably connected to the mirror base 3. Mirror head 2 consists of at least one moulded cover piece or of a upper and lower cover or of a frame or bezel solution with an attached covering scalp device. The mirror housing 2 comprises at least one opening for a turn signal indicator 2 wherein the outer shape of the turn signal indicator follows the outer contour of the mirror housing cover. The extension of the turn signal indicator 2 can be along the whole mirror housing or limited to a portion of the length of the mirror housing. The rear end 6 of turn signal indicator ends at a position from which the emitted light falls in direction rearwardly according the legal regulations. The inner end 18 is defined by turns signal indicator design.

Rear view mirrors can comprise further lighting elements as further indicators or security lights, day running light, or can comprise other electrical or electronic users as cameras and sensors etc. For these functions additional opening can be foreseen in the rear view mirror assembly.

The rear view mirror housing hosts a mirror support and a reflective element and/or a camera element.

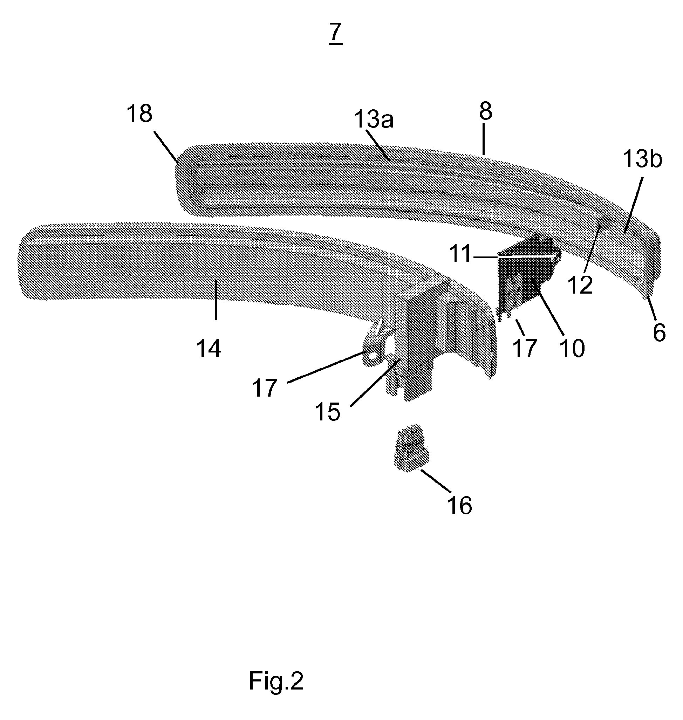

Figure 2 shows an example of a turn signal indicator module that can be installed in the rear view mirror.

The turn signal indicator 2 has two main parts to build a module, the lens 8 covering the turn signal indicator and the housing 14. In the lens 8 a light guide 13 is integrated along the long axis of the turn signal indicator 2. The light guide 13 is a bar shaped elongated device, which can have different cross section shapes according the requested light travelling and light emitting functions. The light guide has two portions 13 a and 13 b that are separated from each others by a recess 12 in the light guide. The opening of the recess 12 is seized to host at least one LED 11 that is inserted into the recess. The outer contour is smoothly adapted to the outer contour of the rear view mirror assembly without stepped structures in the region of the recess. The LED 11 is mounted on a printed circuit board 10 having driver circuitry and connection leads 17.

The turn signal housing 14 forms a cover 15 to protect the printed circuit 10 and to guide the board after installation. A connector 16 connects the electrical wiring to vehicle board system. The turn signal indictor is mounted in simply fixing the printed circuit board in the turn signal indicator housing 15. The housing 14 is than connected to the lens light guide combination and the LED positioned in the light guide recess 12.

Figure 3 shows a cross section through the turn signal indicator with turn signal indicator housing 13 and lens 8 with the two light guide portions 13a and 13b. In this embodiment two LEDs 11 a , 11 b are mounted on both sides of the printed circuit board 10. The LED 11 b emits its light towards the bevelled end 6 of the turn signal indicator. The portion 13b of the light guide is short in comparison with the portion 13a. This helps to achieve a high power of light at the decoupling end 6 of the light guide to be consistent with the legal regulation requirements. For illumination of 13a the second LED 11a emits its light into the longer portion. For this portion is not part of regulation, the light decoupling rates and the impression of this part of turns signal indicator can be modified according customers' needs.

The use of two independent LEDs allows the optimization of power consumption and light power emission at the positions that are needed.

In Figure 4 the lengths of the two light guide portions are defined. The length La follows the rule to be at least two times longer as Lb.

The lengths are than optimal to achieve the required emission profile. A short length La would not achieve the appearance of a smooth light guide. With a longer length Lb the power loss of light in the light guide increases and reduces the available light power to be decoupled at the end facet 6 of the turns signal indicator.

What is not shown in this schematic view are the decoupling structures of the light guide. For decoupling light along the travelling direction decoupling structures are necessary as prismatic structures, facets, or nuts. These structures could be applied to the outside surface 8a of the light guide 8 or the inner surface 8b.

To achieve a lighted appearance of the length La in the light guide a high density of decoupling structures is applied, for it is not necessary that light is emitted at the inner end 18 of the light guide. The power of LED 11a can be fully used to illuminate the light guide as such. On the length Lb more light must emitted at the end 6 and only a part should be decoupled along the length.

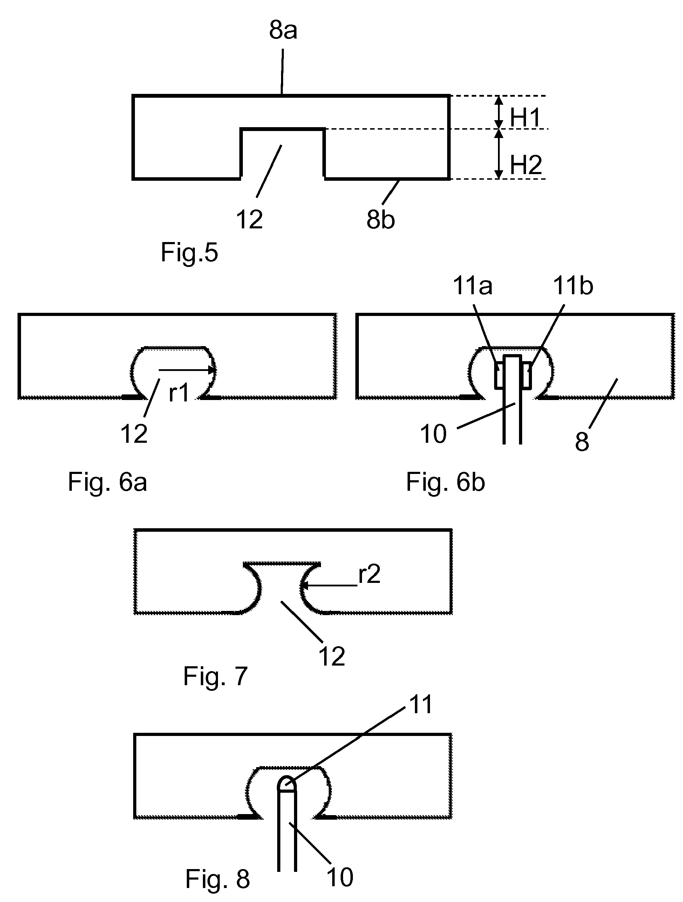

Figure 5 shows the dimension of the recess that covers the LEDs. The strengths of the material are defined by H1 and H2 which generate together the thickness of the light guide structure. The recess has a height of H2 wherein H1 is smaller that H2 and H1 > 1mm. The limitation is the moulding technology so that H1 has a minimum thickness to cover the recess 12 without a stepped structure on the outer surface.

The total seize of the light guide depends also on seize of the used LEDs. Only if the LEDs can be inserted into the recess completely the emitted light can be coupled into the two portions of the light guide. In figure 5, which shows an example of the light guide recess which does not make part of the invention, the side walls of the light guide are rectangular. They are the faces provided to couple light into the two portions of the light guide. Figures 6a and 6b show two alternative solutions which do not form part of the invention.

The coupling faces are designed to show a concave structure with a concave radius r1. Figure 7 shows an embodiment of the invention, wherein the coupling faces are designed to show a convex structure with a convex radius r2.

In Figure 6b it is shown that the LEDs are positioned in the focus of the concave structure.

The convex lens structure of figure 7 has in addition to the function to couple light in the function to guide and fix the LEDs and the printed circuit board in the recess.

Figure 8 shows a solution, which does not form part of the invention, with a circular cross section for recess 12. This solution is optimal for the use of a single LED solution. In this embodiment the single LED is mounted at the top to the printed circuit with its pins on both sides of the printed circuit board. The LED can than emit light in the circular recess in around a space of 180° and the light is coupled into the light guide portions.

Alternative embodiments of the inventional solutions are possible. So the installation of separate light guide behind a lens does not influence the content of the invention. Also the installation or integration of several parallel installed light guides is possible.

## Claims

1. Rear view mirror assembly (1) comprising at least a mirror base (3) and a mirror housing (4) with a reflective element or a camera and with a turn signal indicator module (2) comprising:
a housing (14),
a lens (8),
a light guide (13) smoothly following the outer contour of the rear view mirror and having two portions (13a, 13b) that are separated from each other by a recess (12) in the light guide (13), with the recess (12) receiving at least one light source (11), and
a decoupling rear end (6) ending at a position from which emitted light falls in a direction rearwardly, wherein
the light guide (13) is integrated in the lens (8) along the long axis of the turn signal indicator (2) and two LEDs (11a, 11b) are mounted on both sides of a printed circuit board (10) protected by the turn signal housing (14) forming a cover (15) after being connected to the lens (8),
and, wherein the lengths (La, Lb) of the two light guide portions (13a, 13b) are related by the function La > 2 x Lb, such that the one LED (lib) emits light towards the decoupling rear end (6) of the turn signal indicator module (2) through the shorter light guide portion (13b) and the other LED (11a) emits its light into the longer light guide portion (13a) for illumination of the same, **characterized in that**
the light guide recess (12) has the height H2 covered by material of the strength H1 such that the thickness of the light guide (13) is generated by H1 and H2,
the total size of the light guide (13) depends on the LEDs (11a, 11b) which are completely inserted in the opening provided by the light guide recess (12) in order to emit light into the two portions of the light guide (13), and
the recess (12) has convex shaped side walls with radius r2 and the LEDs are in the focus of the convex faces, with the convex faces guiding the LEDs.

## Patentansprüche

1. Rückspiegelbaueinheit (1), umfassend wenigstens eine Spiegelbasis (3) und ein Spiegelgehäuse (4) mit einem reflektierenden Element oder einer Kamera und mit einem Fahrtrichtungsanzeigermodul (2), umfassend:
ein Gehäuse (14),
eine Linse (8),
einen Lichtleiter (13), der genau der Außenkontur des Rückspiegels folgt und zwei Abschnitte (13a, 13b) aufweist, die durch eine Ausnehmung (12) in dem Lichtleiter (13) voneinander getrennt sind, wobei die Ausnehmung (12) wenigstens eine Lichtquelle (11) aufnimmt, und
ein auskoppelndes hinteres Ende (6), das an einer Position endet, von der aus emittiertes Licht in einer nach hinten weisenden Richtung fällt, wobei der Lichtleiter (13) entlang der langen Achse des Fahrtrichtungsanzeigers (2) in die Linse (8) integriert ist und zwei LEDs (11a, 11b) auf beiden Seiten einer Leiterplatte (10) angebracht sind, geschützt durch das Fahrtrichtungsanzeigergehäuse (14), das nach Verbindung mit der Linse (8) eine Abdeckung (15) ausbildet,
und wobei die Längen (La, Lb) der zwei Lichtleiterabschnitte (13a, 13b) durch die Funktion La > 2 x Lb in Beziehung stehen, derart dass die eine LED (lib) Licht in Richtung des auskoppelnden hinteren Endes (6) des Fahrtrichtungsanzeigermoduls (2) durch den kürzeren Lichtleiterabschnitt (13b) emittiert und die andere LED (11a) ihr Licht in den längeren Lichtleiterabschnitt (13a) emittiert, um diesen zu beleuchten,
**dadurch gekennzeichnet, dass**
die Höhe H2 der Lichtleiterausnehmung (12) durch Material der Stärke H1 bedeckt ist, derart dass die Dicke des Lichtleiters (13) durch H1 und H2 erzeugt wird,
die Gesamtgröße des Lichtleiters (13) von den LEDs (11a, 11b) abhängt, die vollständig in die durch die Lichtleiterausnehmung (12) bereitgestellte Öffnung eingesetzt sind, um Licht in die zwei Abschnitte des Lichtleiters (13) zu emittieren, und
die Ausnehmung (12) konvex geformte Seitenwände mit einem Radius r2 aufweist und sich die LEDs im Brennpunkt der konvexen Flächen befinden, wobei die konvexen Flächen die LEDs führen.

## Revendications

1. Ensemble de rétroviseur (1) comprenant au moins une base de miroir (3) et un boîtier de miroir (4) ayant un élément réflecteur ou un appareil photographique et ayant un module indicateur de signal de virage (2) comprenant :
un boîtier (14),
une lentille (8),
un guide de lumière (13) suivant de manière douce le profil extérieur du rétroviseur et ayant deux parties (13a, 13b) qui sont séparées l'une de l'autre par un évidement (12) dans le guide de lumière (13), l'évidement (12) recevant au moins une source de lumière (11), et une extrémité arrière de découplage (6) se terminant dans une position à partir de laquelle une lumière émise tombe dans une direction vers l'arrière, dans lequel
le guide de lumière (13) est intégré dans l'objectif (8) le long du grand axe de l'indicateur de signal de virage (2) et deux DEL (11a, 11 b) sont montées sur les deux côtés d'une carte à circuit imprimé (10) protégée par le boîtier de signal de virage (14) formant un couvercle (15) après avoir été connectée à la lentille (8),
et dans lequel les longueurs (La, Lb) des deux parties de guide de lumière (13a, 13b) ont pour relation la fonction La > 2 x Lb, de sorte que la DEL (11b) émet une lumière en direction de l'extrémité arrière de découplage (6) du module indicateur de signal de virage (2) à travers la partie de guide de lumière plus courte (13b) et l'autre DEL (11a) émet sa lumière dans la partie de guide de lumière plus longue (13 a) pour éclairage de celle-ci,
**caractérisé en ce que**
l'évidement de guide de lumière (12) a la hauteur H2 recouverte par un matériau de résistance H1 de telle sorte que l'épaisseur du guide de lumière (13) est générée par H1 et H2,
la dimension totale du guide de lumière (13) dépend des DEL (11a, 11b) qui sont entièrement insérées dans l'ouverture fournie par l'évidement de guide de lumière (12) afin d'émettre une lumière dans les deux parties du guide de lumière (13),
et
l'évidement (12) a des parois latérales de forme convexe ayant un rayon r2 et les DEL sont au foyer des faces convexes, les faces convexes guidant les DEL.
